# EUROPÄISCHE PATENTANMELDUNG

(11) **EP 3 567 244 A1**
(43) Veröffentlichungstag der Anmeldung: **13.11.2019**
(21) Anmeldenummer: 19173258.5
(22) Anmeldetag: 08.05.2019
(51) Int. Cl.: F03D 1/06, F03D 80/40, F03D 80/50

(54) **BEHEIZBARES ROTORBLATT EINER WINDENERGIEANLAGE**

(30) Priorität: 09.05.2018 DE 102018003757
(71) Anmelder: Senvion GmbH, 22297 Hamburg (DE)
(72) Erfinder: MAAß, Johann, 24768 Rendsburg (DE); ASMUSSEN, Clemens, 24242 Felde (DE); ZELLER, Lenz, 24242 Felde (DE)
(74) Vertreter: Hahner, Ralph

(57) **Zusammenfassung**

Die Erfindung betrifft ein beheizbares Rotorblatt einer Windenergieanlage, ein Kanalsegment für eine Windenergieanlage, ein Luftführungssystem zur Enteisung eines Rotorblatts einer Windenergieanlage, eine Windenergieanlage mit einem solchen Rotorblatt und/oder einem solchen Kanalsegment und/oder einem solchen Luftführungssystem sowie ein Verfahren zum Montage oder Reparatur eines beheizbaren Rotorblatts einer Windenergieanlage. Das Rotorblatt erstreckt sich von einer Blattwurzel zu einer Blattspitze und weist einen Hohlraum und eine Führung auf, wobei die Führung sich in dem Hohlraum in einer Längsrichtung des Rotorblatts erstreckt und eingerichtet ist, ein Führungsschlittensystem verschiebbar zu lagern, mittels welchem ein, insbesondere thermisch isolierter, Kanal zum Führen von Warmluft in Richtung der Blattspitze in das Rotorblatt einführbar oder eingeführt ist.

## Beschreibung

Die Erfindung betrifft ein beheizbares Rotorblatt einer Windenergieanlage, ein Kanalsegment für eine Windenergieanlage, ein Luftführungssystem zur Enteisung eines Rotorblatts einer Windenergieanlage, eine Windenergieanlage mit einem solchen Rotorblatt und/oder einem solchen Kanalsegment und/oder einem solchen Luftführungssystem sowie ein Verfahren zur Montage oder Reparatur eines beheizbaren Rotorblatts einer Windenergieanlage.

Beim Betrieb von Windenergieanlagen kann es bei Unterschreiten einer bestimmten Umgebungstemperatur zu einer Anlagerung von Eis an den Rotorblättern der Windenergieanlage kommen. Um diese Eisbildung an den Rotorblättern zu verringern bzw. zu verhindern, werden Rotorblätter mittels erwärmter Luft beheizt, wobei die erwärmte Luft innerhalb der Rotorblätter strömt. Hierzu sind Luftführungen innerhalb der Rotorblätter notwendig, um die erwärmte Luft zu den Stellen des Rotorblatts bei welchen die Gefahr einer Eisanlagerung wahrscheinlich ist, zu führen. Dieses Risiko besteht insbesondere an der Rotorblattvorderkante.

Aus der WO 2014/202164 A1 ist ein Rotorblatt einer Windenergieanlage bekannt, welches einen Hohlraum aufweist, der durch einen Steg, der in Längserstreckung des Rotorblatts angeordnet ist und einen ersten Bereich des Rotorblatts umfassend eine Rotorblattnase von einem zweiten Bereich des Rotorblatts umfassend eine Hinterkante abtrennt. Ein wärmeisolierter Kanal ist im ersten Bereich des Rotorblatts angeordnet, um in einem Luftstrom Warmluft in Richtung der Blattspitze zu führen, wobei in dem Kanal Öffnungen vorgesehen sind, die dergestalt ausgebildet sind, die Warmluft zur Rotorblattnase zu leiten, wobei eine Rückführung der Warmluft zur Blattwurzel hin im ersten Bereich des Rotorblatts erfolgt.

Die WO 2016/034614 A1 offenbart ein Rotorblatt einer Windenergieanlage, wobei das Rotorblatt ein Enteisungssystem aufweist. Dieses dient zum Erwärmen wenigstens eines Teils einer Vorderkante des Rotorblatts, um die Bildung von Eis am Rotorblatt zu verhindern bzw. am Rotorblatt vorhandenes Eis zu entfernen.

Es ist eine Aufgabe der Erfindung ein beheizbares Rotorblatt zu verbessern. Insbesondere ist es eine Aufgabe, eine Herstellung eines beheizbaren Rotorblatts zu vereinfachen.

Diese Aufgabe wird gelöst durch ein beheizbares Rotorblatt einer Windenergieanlage, ein Kanalsegment für eine Windenergieanlage, ein Luftführungssystem zur Enteisung eines Rotorblatts einer Windenergieanlage, eine Windenergieanlage mit einem Rotorblatt und/oder einem Kanalsegment und/oder einem Luftführungssystem sowie einem Verfahren zur Montage oder Reparatur eines beheizbaren Rotorblatts einer Windenergieanlage gemäß den unabhängigen Ansprüchen.

Ein erster Aspekt der Erfindung betrifft ein beheizbares Rotorblatt einer Windenergieanlage, wobei sich das Rotorblatt von einer Blattwurzel zu einer Blattspitze erstreckt und einen Hohlraum und eine Führung aufweist, wobei die Führung sich in dem Hohlraum in einer Längsrichtung des Rotorblatts erstreckt und eingerichtet ist, ein Führungsschlittensystem verschiebbar zu lagern, mittels welchem ein, insbesondere thermisch isolierter, Kanal zum Führen von Warmluft in Richtung der Blattspitze in das Rotorblatt einführbar oder eingeführt ist.

Ein zweiter Aspekt der Erfindung betrifft ein Kanalsegment, vorzugsweise thermisch isoliert, für eine Windenergieanlage, welches wenigstens einen Führungsschlitten aufweist, um auf einer Führung eines Rotorblatts, insbesondere gemäß dem ersten Aspekt der Erfindung, der Windenergieanlage verschiebbar gelagert zu werden.

Ein dritter Aspekt der Erfindung betrifft ein Luftführungssystem zur Enteisung eines Rotorblatts einer Windenergieanlage, welches eine Vielzahl an, insbesondere thermisch isolierten, Kanalsegmenten, insbesondere gemäß dem zweiten Aspekt der Erfindung, und eine Führung, welche an einem Rotorblatt, insbesondere gemäß dem ersten Aspekt der Erfindung, befestigbar ist, aufweist, wobei Führungsschlitten der Kanalsegmente in der Führung gleiten.

Ein vierter Aspekt der Erfindung betrifft eine Windenergieanlage mit einem Rotorblatt und/oder einem Kanalsegment und/oder einem Luftführungssystem gemäß dem ersten, zweiten bzw. dritten Aspekt der Erfindung.

Ein fünfter Aspekt der Erfindung betrifft ein Verfahren zur Montage oder Reparatur eines beheizbaren Rotorblatts einer Windenergieanlage, folgende Schritte aufweisend:
- Bereitstellen eines Rotorblatts, insbesondere gemäß dem ersten Aspekt der Erfindung, mit einer Führung, welche sich in einem Hohlraum des Rotorblatts in einer Längsrichtung des Rotorblatts erstreckt;
- Bereitstellen einer Vielzahl an Kanalsegmenten, insbesondere gemäß dem zweiten Aspekt der Erfindung, mit jeweils wenigstens einem Führungsschlitten, welcher eingerichtet ist, um auf der Führung verschiebbar gelagert zu werden; und
- Einführen der Kanalsegmente in die Führung, wobei sich nach und nach ein Kanal in dem Rotorblatt ausbildet.

Die Erfindung basiert insbesondere auf dem Ansatz, einen Luftführungskanal von erwärmter Luft innerhalb eines beheizbaren Rotorblatts verschiebbar auf einer Gleitschiene zu lagern, um mehr Flexibilität während der Herstellung, der Montage, des Betriebs bzw. auch der Reparatur oder einem Austausch dieses Luftführungskanals zu ermöglichen.

Somit ist es auch nach der Herstellung des Rotorblatts möglich, die Luftführung individuell anzupassen, um beispielsweise verschiedene Einflüsse, wie etwa der Standort der Windenergieanlage oder auch die Höhe, an welcher das Rotorblatt an dem Turm einer Windenergieanlage angeordnet ist, in die Anordnung des Luftführungskanals im Rotorblatt miteinfließen zu lassen.

Ferner kann dadurch auch ein modularer Aufbau des Luftführungskanals erreicht werden, da der Luftführungskanal in mehrere Kanalsegmente aufgeteilt werden kann, wodurch die Länge des Luftführungskanals individuell anpassbar ist. Auch kann ein fehlerhaftes Kanalsegment des Luftführungskanals auf einfache Weise ausgetauscht werden, ohne das Rotorblatt zu demontieren oder auf andere Weise zu öffnen, wie etwa durch Sägen oder Schneiden..

Des Weiteren erweist sich ein solches Rotorblatt im Hinblick auf die Montage bzw. Herstellung eines solchen Rotorblatts als vorteilhaft, da die Montage des Luftführungskanals auch nach dem Zusammenfügen von wenigstens zwei Schalen zu einem Rotorblatt auf einfache Weise erfolgen kann, indem die Kanalsegmente vorzugsweise blattwurzelseitig in das Rotorblatt eingeführt werden können.

In einer bevorzugten Ausgestaltung weist das Rotorblatt des Weiteren einen Steg auf, welcher sich ebenfalls in der Längsrichtung des Rotorblattes erstreckt, wobei der Steg einen ersten Bereich des Hohlraums in Richtung Rotorblattnase von einem zweiten Bereich des Hohlraums in Richtung Rotorblatthinterkante teilt und wobei die Führung auf dem Steg angeordnet ist. Dadurch kann eine stabile Anbringung der Führung innerhalb des Rotorblatts ermöglicht werden.

In einer weiteren bevorzugten Ausgestaltung ist die Führung auf einer Schale des Rotorblatts angeordnet. Hierdurch kann eine einfache Anordnung der Führung innerhalb des Rotorblatts ermöglicht werden.

In einer weiteren bevorzugten Ausgestaltung weist der Kanal mehrere Kanalsegmente und das Führungsschlittensystem mehrere Führungsschlitten auf, welche jeweils einzeln in der Führung verschiebbar gelagert sind, wobei jedes Kanalsegment an wenigstens einem, vorzugsweise an drei, Führungsschlitten befestigt ist. Somit kann der Kanal in mehrere Kanalsegmente unterteilt werden, sodass in Abhängigkeit von Parametern des Rotorblatts wie etwa dessen Länge oder des Bereichs, in welchem eine Vereisung des Rotorblatts wahrscheinlich ist, die Länge des Kanals individuell anpassbar ist. Ferner kann somit auch die Montage oder auch ein Austausch wenigstens eines Teils des Kanals auf einfache Weise erfolgen, da nicht der gesamte Kanal in einem Schritt montiert bzw. ausgetauscht wird, sondern segmentweise erfolgen kann.

In einer weiteren bevorzugten Ausgestaltung weist das Kanalsegment wenigstens einen, vorzugsweise drei, Führungsschlitten auf, welcher wenigstens im Wesentlichen in einer Linie parallel zu einer Längsachse des Kanalsegments ausgerichtet ist. Durch den Führungsschlitten ist es möglich, das jeweilige Kanalsegment unabhängig von dessen Größe über den Führungsschlitten an bzw. in der Führung zu führen. Des Weiteren kann dadurch auch eine reibungsarme Verschiebung des jeweiligen Kanalsegments innerhalb des Rotorblatts ermöglicht werden.

In einer weiteren bevorzugten Ausgestaltung weist das Kanalsegment an wenigstens einem seiner beiden Enden eine Abdichteinrichtung auf, welche eingerichtet ist, mit einem weiteren Kanalsegment dichtend zusammenzuwirken. Dies dient dazu, etwaige Leckströme der erwärmten Luft, welche durch wenigstens zwei aneinandergereihte Kanalsegmente strömt, zu verringern bzw. zu verhindern.

In einer weiteren bevorzugten Ausgestaltung ist jedes Kanalsegment etwa 1 m bis etwa 2 m lang, vorzugsweise in Abhängigkeit von seiner Stellung im Rotorblatt im fertig montierten

Zustand. Innerhalb dieses Längenbereichs der Kanalsegmente ist die Montage bzw. der Austausch der Kanalsegmente besonders einfach durchführbar. Des Weiteren ist mit diesem Längenbereich die Position beziehungsweise Länge des gesamten Kanals auf einfache Weise anpassbar, ohne einen deutlichen zeitlichen Mehraufwand aufgrund des segmentweisen Einbringens bzw. Entfernens der Kanalsegmente in die Führung hinein bzw. aus der Führung heraus zu haben. Ferner kann somit auch eine etwaige Krümmung der Führung innerhalb des Rotorblatts wenigstens teilweise ausgeglichen werden.

In einer weiteren bevorzugten Ausgestaltung weist das Kanalsegment eine Verbindungseinrichtung, insbesondere einen Flansch oder ein Nut-Feder-System, auf, um mit einem anderen Kanalsegment formschlüssig und/oder reibschlüssig, insbesondere luftdicht, verbunden zu werden. Mittels dieser Ausgestaltung können mehrere Kanalsegmente miteinander verbunden werden, sodass ein Verschieben zweier Kanalsegmente in Längsrichtung des Rotorblatts voneinander weg verhindert werden kann. Vorzugsweise ist die Verbindungseinrichtung zusätzlich als Abdichteinrichtung zum Abdichten einer Anschlussstelle zwischen zwei Kanalsegmenten ausgebildet.

In einer weiteren bevorzugten Ausgestaltung weist das Verfahren des Weiteren folgenden Arbeitsschritt auf:
- Entfernen, vor dem Einführen von Kanalsegmenten, von bereits in der Führung vorhandenen Kanalsegmenten.

Durch diesen Arbeitsschritt kann ein defektes Kanalsegment auf einfache Weise ausgetauscht werden.

Die in Bezug auf den ersten Aspekt der Erfindung und dessen vorteilhafte Ausgestaltung beschriebenen Merkmale und Vorteile gelten auch für den zweiten, dritten, vierten und fünften Aspekt der Erfindung und dessen vorteilhafte Ausgestaltung sowie umgekehrt.

Weitere Merkmale, Vorteile und Anwendungsmöglichkeiten der Erfindung ergeben sich aus der nachfolgenden Beschreibung von Ausführungsbeispielen im Zusammenhang mit den Figuren, in denen dieselben Bezugszeichen für dieselben oder einander entsprechende Elemente der Erfindung verwendet werden. Es zeigen wenigstens teilweise schematisch:
- **Fig. 1**: ein Ausführungsbeispiel eines Rotorblatts im Querschnitt;
- **Fig. 2**: ein Ausführungsbeispiel eines Stegs eines Rotorblatts;
- **Fig. 3**: eine Ansicht eines Ausführungsbeispiels eines Führungsschlittensystems;
- **Fig. 4**: eine Ansicht eines Ausführungsbeispiels eines Luftführungssystems;
- **Fig. 5**: eine weitere Ansicht eines Ausführungsbeispiels eines Luftführungssystems nach Fig. 4;
- **Fig. 6**: Ansichten verschiedener Verbindungseinrichtungen zur Verbindung zweier Kanalsegmente; und
- **Fig. 7**: ein Blockdiagramm eines Ausführungsbeispiels eines Verfahrens zur Montage oder Reparatur eines beheizbaren Rotorblatts einer Windenergieanlage.

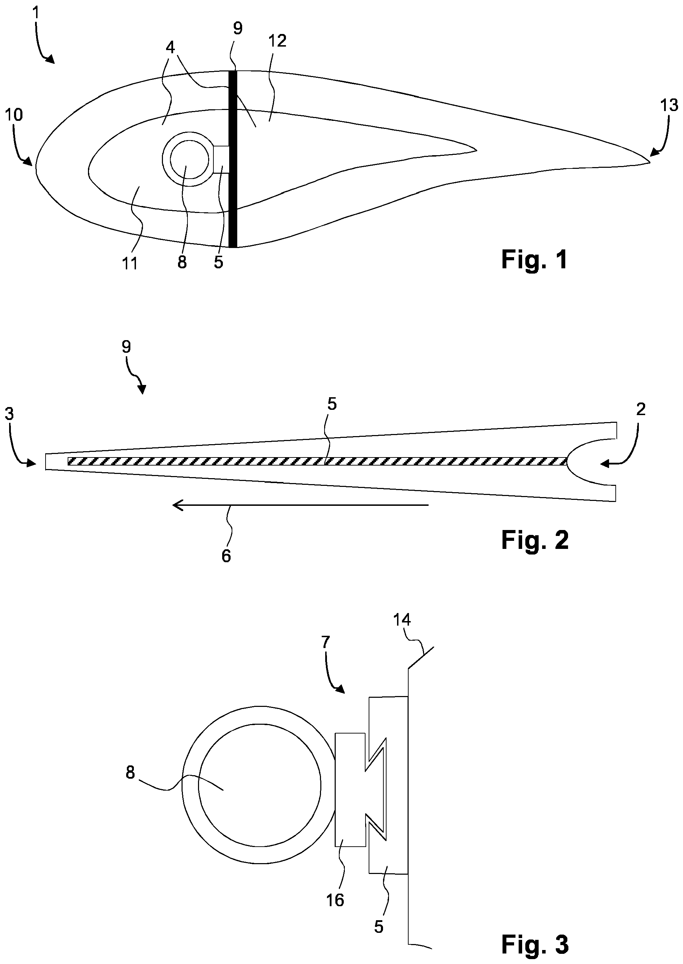

**Fig. 1** zeigt ein Ausführungsbeispiel eines Rotorblatts 1 im Querschnitt. Das Rotorblatt 1 weist einen Hohlraum 4 sowie einen Steg 9 auf, wobei der Steg 9 den Hohlraum 4 in einen ersten Bereich 11 in Richtung der Rotorblattnase 10 und einen zweiten Bereich 12 in Richtung der Rotorblatthinterkante 13 teilt. Vorzugsweise können auch zwei oder mehr Stege 9 innerhalb des Rotorblatts 1 angeordnet sein.

An dem Steg 9 ist eine Führung 5 angeordnet, welche dazu eingerichtet ist, ein Führungsschlittensystem 7 verschiebbar zu lagern, mittels welchem ein, insbesondere thermisch isolierter, Kanal 8 zum Führen von Warmluft in Richtung der Blattspitze 3 in das Rotorblatt 1 einführbar oder eingeführt ist.

**Fig. 2** zeigt ein Ausführungsbeispiel eines Stegs 9 eines Rotorblatts 1. Der Steg des Rotorblatts 1, welcher sich von der Blattwurzel 2 zu der Blattspitze 3 hin erstreckt, weist die Führung 5 auf, welche sich in der Längsrichtung 6 des Rotorblatts 1 erstreckt.

**Fig. 3** zeigt eine Ansicht eines Ausführungsbeispiels eines Führungsschlittensystems 7. In dieser Darstellung ist die Führung 5 an einem Teil einer Schale 14 des Rotorblatts 1 angeordnet. Die Führung 5 ist vorzugsweise, wie hier dargestellt, als Gleitschiene ausgebildet, sodass ein Führungsschlitten 16 in die Führung 5 einbringbar bzw. eingebracht ist, sodass eine Bewegung bzw. eine Verschiebung des Führungsschlittens 16, welche nicht in Längsrichtung 6 des Rotorblatts 1 erfolgt, im Wesentlichen verhindert wird. An dem Führungsschlitten 16 ist der Kanal 8 angeordnet, in welchem die Warmluft von der Blattwurzel 2 aus zu der Blattspitze 3 hin strömt.

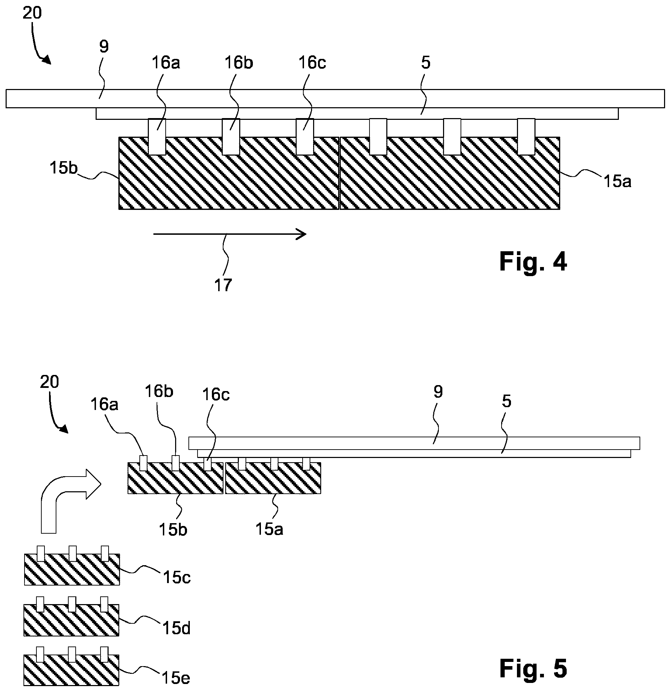

**Fig. 4** zeigt eine Ansicht eines Ausführungsbeispiels eines Luftführungssystems 20. In diesem Ausführungsbeispiel ist die Führung 5 an dem Steg 9, welcher sich von der Druckseite zu der Pressseite des Rotorblatts 1 hin erstreckt, angeordnet. Der Kanal 8 ist in zwei Kanalsegmente 15a, 15b unterteilt, welche jeweils drei Führungsschlitten 16a, 16b, 16c aufweisen. Die Führungsschlitten 16a, 16b, 16c sind dabei bereits in die Führung 5 eingebracht, sodass die beiden Kanalsegmente 15a, 15b in Längsrichtung 6 des Rotorblatts 1 verschiebbar gelagert sind.

Wie in dieser Darstellung ersichtlich, sind die jeweiligen drei Führungsschlitten 16a, 16b, 16c der beiden Kanalsegmente 15a, 15b wenigstens im Wesentlichen in einer Linie parallel zu einer Längsachse 17 des jeweiligen Kanalsegments 15a, 15b ausgerichtet. Das jeweilige Kanalsegment 15a, 15b ist vorzugsweise als Hohlzylinder, als Hohlquader, als Hohlprisma ausgebildet. Das Kanalsegment kann aber auch jede andere Art von dreidimensionaler hohler Form aufweisen.

Des Weiteren kann die Längsachse 17 des Kanalsegments 15 bzw. der Kanalsegmente 15a, 15b wenigstens teilweise gekrümmt sein. Um dennoch ein Verschieben der Führungsschlitten 16a, 16b, 16c in der Führung 5 zu ermöglichen, weisen die Führungsschlitten 16a, 16b, 16c vorzugsweise eine Spielpassung auf, sodass auch Krümmungen innerhalb des Führungsschlittensystems 7 wenigstens teilweise ausgleichbar sind.

Um etwaige Probleme beim Verschieben der Führungsschlitten 16a, 16b, 16c, insbesondere bei einer vorhandenen Krümmung, zu verringern bzw. zu verhindern, sind die Kanalsegmente 15a, 15b vorzugsweise etwa 1 m bis 2 m lang. Insbesondere kann die Länge der Kanalsegmente 15a, 15b jedoch auch von der Stellung im Rotorblatt 1 im fertig montierten Zustand abhängen. Alternativ und/oder zusätzlich können die Kanalsegmente 15a, 15b flexibel ausgebildet sein, insbesondere einen Schaumstoff aufweisen bzw. aus Schaumstoff gebildet sein.

**Fig. 5** zeigt eine weitere Ansicht des Ausführungsbeispiels eines Luftführungssystems 20 nach Fig. 4. Dabei sind zwei Kanalsegmente 15a, 15b der fünf, insbesondere thermisch isolierten, Kanalsegmente 15a, 15b, 15c, 15d, 15e bereits über deren jeweils verschiebbar gelagerte Führungsschlitten 16a, 16b ,16c in der Führung 5 angeordnet, in welcher diese in Längsrichtung 6 des Rotorblatts 1 bzw. in der Längsachse 17 des jeweiligen Kanalsegments 15a, 15b gleiten können.

Die Führung 5 ist dabei an dem Steg 9 angeordnet. Wie mit dem Pfeil ersichtlich, kann eine Vielzahl von Kanalsegmenten 15a, 15b, 15c, 15d, 15e in die Führung 5 hineingeschoben bzw. eingebracht werden, sodass über die gesamte Längsrichtung 6 des Rotorblatts 1 verteilt Kanalsegmente 15a, 15b, 15c, 15d 15e in das Rotorblatt 1 eingebracht werden können.

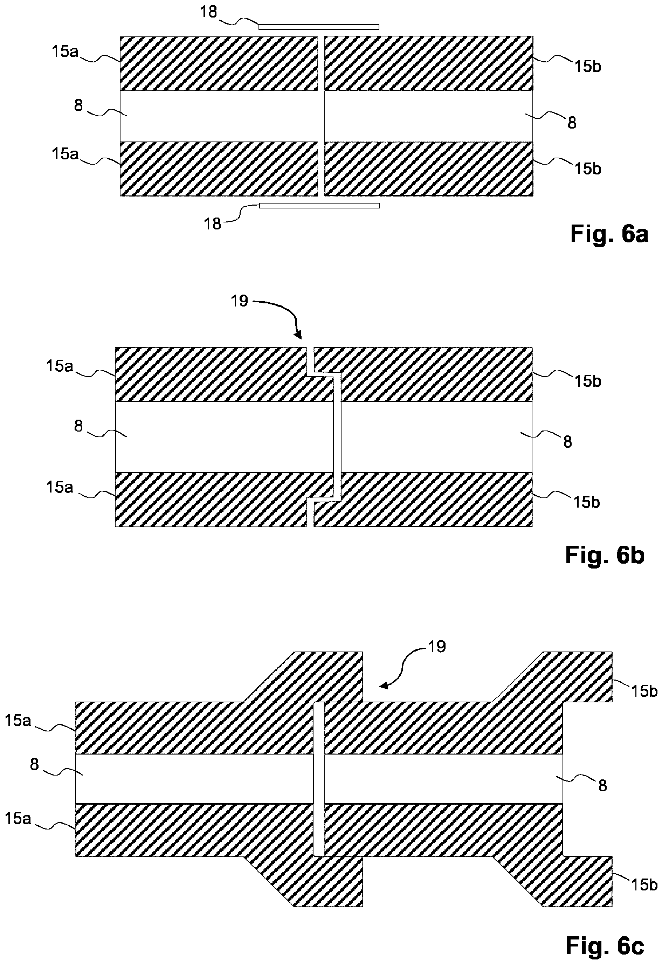

**Fig. 6** zeigt Ansichten verschiedener Verbindungseinrichtungen zur Verbindung zweier Kanalsegmente 15a, 15b im Querschnitt. Wie in Fig. 6a dargestellt, kann beim Übergang von dem ersten Kanalsegment 15a zum zweiten Kanalsegment 15b eine Abdichteinrichtung 18 angeordnet sein, welche die beiden Kanalsegmente 15a, 15b im Wesentlichen vollständig umhüllt, sodass die beiden Kanalsegmente verbindbar sind, ohne dass ein Leckstrom der erwärmten Luft, welche durch die beiden Kanalsegmente 15a, 15b strömt, am Übergang zwischen den beiden Kanalsegmenten 15a, 15b austritt. Die Abdichteinrichtung 18 kann dabei insbesondere gleichzeitig und/oder zusätzlich als Verbindungseinrichtung 19 ausgebildet sein, sodass die beiden Kanalsegmente 15a, 15b formschlüssig und/oder reibschlüssig und insbesondere luftdicht verbindbar bzw. verbunden sind.

Bei der Abdichteinrichtung 18 handelt es sich beispielsweise um ein elastisches Band, welches vorzugsweise auf der den beiden Kanalsegmenten 15a, 15b zugewandten Seite selbstklebend ausgebildet ist. Alternativ kann jedoch auch jede andere Form einer Abdichteinrichtung 18 verwendet werden, sodass die beiden Kanalsegmente 15a, 15b strömungsverbindbar abgedichtet werden können.

In Fig. 6b ist eine weitere Verbindungseinrichtung 19 in Form eines Nut-Feder-Systems dargestellt, wobei das erste Kanalsegment 15a derart ausgebildet, dass dessen Ende, welches mit dem zweiten Kanalsegment 15b verbunden wird, eine Nut aufweist. Das zweite Kanalsegment 15b weist eine Feder an dessen Ende auf, welches mit dem ersten Kanalsegment 15a verbunden wird, sodass diese Feder mit der Nut des ersten Kanalsegments 15a im Wesentlichen formschlüssig und/oder reibschlüssig verbindbar ist, um eine stabile Aneinanderreihung der beiden Kanalsegmente 15a, 15b zu erreichen. Vorzugsweise weist die Verbindungseinrichtung 18 wenigstens einen Haken oder ein hakenähnliches Verbindungselement am jeweiligen Kanalsegment 15a, 15b auf, sodass die beiden Kanalsegmente 15a, 15b formschlüssig und/oder reibschlüssig miteinander verbindbar bzw. verbunden sind.

Eine weitere Alternative einer Verbindungseinrichtung 19 ist in Fig. 6c dargestellt. Hierbei überragt das Ende des ersten Kanalsegments 15a, welches mit dem zweiten Kanalsegment 15b verbunden wird, das Ende des zweiten Kanalsegments 15b, welches mit dem ersten Kanalsegment 15a verbunden wird, sodass durch diese Überlappung ebenfalls eine stabile Aneinanderreihung der beiden Kanalsegmente 15a, 15b ermöglicht wird.

Des Weiteren können neben diesen beiden exemplarischen Ausführungsformen noch allgemein bekannte Verbindungsausgestaltungen wie etwa ein Flansch oder dergleichen zur formschlüssigen bzw. reibschlüssigen Verbindung zweier Kanalsegmente 15a, 15b verwendet werden. Eine Kombination von Verbindungsausgestaltungen ist ebenfalls möglich. Dadurch kann zusammengefasst eine steckbare und insbesondere wieder lösbare Verbindung einer Vielzahl von Kanalsegmenten 15a, 15b, 15c, 15d, 15e erreicht werden.

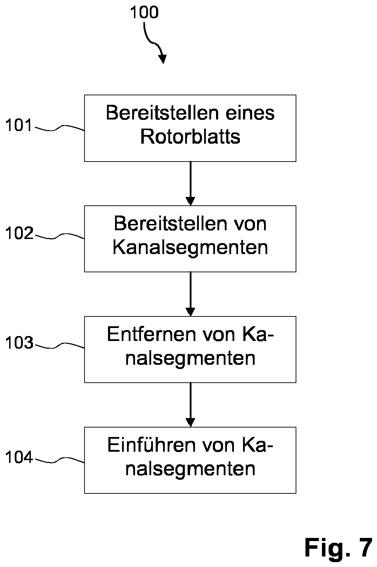

**Fig. 7** zeigt ein Blockdiagramm eines Ausführungsbeispiels eines Verfahrens 100 zur Montage oder Reparatur eines beheizbaren Rotorblatts 1 einer Windenergieanlage.

In einem ersten Schritt 101 wird ein Rotorblatt 1 bereitgestellt, welches eine Führung 5 aufweist, wobei sich die Führung 5 in einem Hohlraum 4 des Rotorblatts 1 in Längsrichtung 6 des Rotorblatts 1 erstreckt.

In einem nächsten Schritt 102 wird eine Vielzahl von Kanalsegmenten 15a, 15b, 15c, 15d, 15e bereitgestellt, welche jeweils wenigstens einen Führungsschlitten 16 aufweisen, wobei die Kanalsegmente 15a, 15b, 15c, 15d, 15e dazu eingerichtet sind, um auf der Führung 5 verschiebbar gelagert zu werden.

In einem weiteren optionalen Schritt 103 kann wenigstens ein in der Führung 5 vorhandenes Kanalsegment 15a, 15b, 15c, 15d, 15e entfernt werden.

In einem nächsten Schritt 104 wird ein einzelnes oder werden auch mehrere Kanalsegmente 15a, 15b, 15c, 15d, 15e in die Führung 5 eingeführt, sodass sich nach und nach ein Kanal 8 in dem Rotorblatt 1 ausbildet. Dieser Kanal 8 kann zum Führen von Warmluft in Richtung der Blattspitze 3 ausgehend von der Blattwurzel 2 verwendet werden.

Außerdem sei darauf hingewiesen, dass es sich bei den Ausführungsbeispielen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens eines Ausführungsbeispiels gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Rotorblatt
- 2: Blattwurzel
- 3: Blattspitze
- 4: Hohlraum
- 5: Führung
- 6: Längsrichtung des Rotorblatts
- 7: Führungsschlittensystem
- 8: Kanal
- 9: Steg
- 10: Rotorblattnase
- 11: erster Bereich
- 12: zweiter Bereich
- 13: Rotorblatthinterkante
- 14: Schale
- 15a, b, c, d, e: Kanalsegment
- 16a, b, c: Führungsschlitten
- 17: Längsachse des Kanalsegments
- 18: Abdichteinrichtung
- 19: Verbindungseinrichtung
- 20: Luftführungssystem

## Patentansprüche

1. Beheizbares Rotorblatt (1) einer Windenergieanlage, wobei sich das Rotorblatt (1) von einer Blattwurzel (2) zu einer Blattspitze (3) erstreckt und einen Hohlraum (4) und eine Führung (5) aufweist, wobei die Führung (5) sich in dem Hohlraum (4) in einer Längsrichtung (6) des Rotorblatts (1) erstreckt und eingerichtet ist, ein Führungsschlittensystem (7) verschiebbar zu lagern, mittels welchem ein, insbesondere thermisch isolierter, Kanal (8) zum Führen von Warmluft in Richtung der Blattspitze (3) in das Rotorblatt (1) einführbar oder eingeführt ist.

2. Rotorblatt (1) nach Anspruch 1, des Weiteren einen Steg (9) aufweisend, welcher sich ebenfalls in der Längsrichtung (6) des Rotorblattes (1) erstreckt, wobei der Steg (9) einen ersten Bereich (11) des Hohlraums (4) in Richtung Rotorblattnase (10) von einem zweiten Bereich (12) des Hohlraums (4) in Richtung Rotorblatthinterkante (13) teilt und wobei die Führung (5) auf dem Steg (9) angeordnet ist.

3. Rotorblatt (1) nach Anspruch 1, wobei die Führung (5) auf einer Schale (14) des Rotorblatts (1) angeordnet ist.

4. Rotorblatt (1) nach einem der vorhergehenden Ansprüche, wobei der Kanal (8) mehrere Kanalsegmente (15a, 15b, 15c, 15d, 15e) aufweist und das Führungsschlittensystem (7) mehrere Führungsschlitten (16a, 16b, 16c) aufweist, welche jeweils einzeln in der Führung (5) verschiebbar gelagert sind, wobei jedes Kanalsegment (15a, 15b, 15c, 15d, 15e) an wenigstens einem, vorzugsweise an drei, Führungsschlitten (16a; 16b; 16c) befestigt ist.

5. Kanalsegment (15a; 15b; 15c; 15d; 15e), vorzugsweise thermisch isoliert, für eine Windenergieanlage, welches wenigstens einen Führungsschlitten (16a; 16b; 16c) aufweist, um auf einer Führung (5) eines Rotorblatts (1), insbesondere nach einem der Ansprüche 1 bis 4, einer Windenergieanlage verschiebbar gelagert zu werden.

6. Kanalsegment (15a; 15b; 15c; 15d; 15e) nach Anspruch 5, welches wenigstens zwei, vorzugsweise drei, Führungsschlitten (16a; 16b; 16c) aufweist, welche wenigstens im Wesentlichen in einer Linie parallel zu einer Längsachse 17 des Kanalsegments (15a; 15b; 15c; 15d; 15e) ausgerichtet sind.

7. Kanalsegment (15a; 15b; 15c; 15d; 15e) nach Anspruch 5 oder 6, wobei das Kanalsegment (15a; 15b; 15c; 15d; 15e) an wenigstens einem seiner beiden Enden eine Abdichteinrichtung (18) aufweist, welche eingerichtet ist, mit einem weiteren Kanalsegment (15a; 15b; 15c; 15d; 15e) dichtend zusammenzuwirken.

8. Kanalsegment (15a; 15b; 15c; 15d; 15e) nach einem der Ansprüche 5 bis 7, wobei jedes Kanalsegment (15a; 15b; 15c; 15d; 15e) etwa 1 m bis etwa 2 m, vorzugsweise in Abhängigkeit von seiner Stellung im Rotorblatt (1) im fertig montierten Zustand, lang ist.

9. Kanalsegment (15a; 15b; 15c; 15d; 15e) nach einem der Ansprüche 5 bis 8, wobei das Kanalsegment (15a; 15b; 15c; 15d; 15e) flexibel ist, und vorzugsweise aus Schaumstoff ist.

10. Kanalsegment (15a; 15b; 15c; 15d; 15e) nach einem der Ansprüche 5 bis 9, welches eine Verbindungseinrichtung (19), insbesondere einen Flansch oder ein Nut-Feder-System, aufweist, um mit einem anderen Kanalsegment (15a; 15b; 15c; 15d; 15e) formschlüssig und/oder reibschlüssig, insbesondere luftdicht, verbunden zu werden.

11. Luftführungssystem (20) zur Enteisung eines Rotorblatts (1) einer Windenergieanlage, welches eine Vielzahl an, insbesondere thermisch isolierten, Kanalsegmenten (15a, 15b, 15c, 15d, 15e), insbesondere nach einem der Ansprüche 5 bis 10, und eine Führung (5), welche an einem Rotorblatt (1), insbesondere nach einem der Ansprüche 1 bis 4, befestigbar ist, aufweist, wobei Führungsschlitten (16a, 16b, 16c) der Kanalsegmente (15a, 15b, 15c, 15d, 15e) in der Führung (5) gleiten.

12. Windenergieanlage mit einem Rotorblatt (1) und/oder einem Kanalsegment (15a; 15b; 15c; 15d; 15e) und/oder einem Luftführungssystem (20) nach wenigstens einem der Ansprüche 1 bis 11.

13. Verfahren (100) zur Montage oder Reparatur eines beheizbaren Rotorblatts (1) einer Windenergieanlage, folgende Schritte aufweisend:
- Bereitstellen (101) eines Rotorblatts (1), insbesondere nach einem der Ansprüche 1 bis 4, mit einer Führung (5), welche sich in einem Hohlraum (4) des Rotorblatts (1) in einer Längsrichtung (6) des Rotorblatts (1) erstreckt;
- Bereitstellen (102) einer Vielzahl an Kanalsegmenten (15a, 15b, 15c, 15d, 15e), insbesondere nach einem der Ansprüche 5 bis 10, mit jeweils wenigstens einem Führungsschlitten (16a; 16b; 16c), welcher eingerichtet ist, um auf der Führung (5) verschiebbar gelagert zu werden; und
- Einführen (104) der Kanalsegmente (15a, 15b, 15c, 15d, 15e) in die Führung (5), wobei sich nach und nach ein Kanal (8) in dem Rotorblatt (1) ausbildet.

14. Verfahren (100) nach Anspruch 13, des Weiteren folgenden Arbeitsschritt aufweisend:
- Entfernen (103), vor dem Einführen von Kanalsegmenten (15a, 15b, 15c, 15d, 15e), von bereits in der Führung (5) vorhandenen Kanalsegmenten (15a, 15b, 15c, 15d, 15e).
